# EUROPEAN PATENT APPLICATION

(11) **EP 3 492 980 A1**
(43) Date of publication of application: **05.06.2019**
(21) Application number: 17833785.3
(22) Date of filing: 09.05.2017
(51) Int. Cl.: G03B 27/62, H04N 1/028, H04N 1/04

(54) **METHOD FOR MANUFACTURING IMAGE SCANNER**

(30) Priority: 28.07.2016 JP 2016148957
(71) Applicant: Kyocera Document Solutions Inc., Osaka-shi, Osaka 540-8585 (JP)
(72) Inventor: KUROTSU Yoshihiko, Osaka-shi Osaka 540-8585 (JP); OKUNO Yosuke, Osaka-shi Osaka 540-8585 (JP)
(74) Representative: BRP Renaud & Partner mbB Rechtsanwälte Patentanwälte Steuerberater
(86) International application number: PCT/JP2017/017571
(87) International publication number: WO 2018/020774

(57) **Abstract**

Provided is a manufacturing method of a sheet-through image reading apparatus, including a first step of preparing a contact glass, a second step of bonding, after the first step, a heat-resistant and insulative sheet-shaped material to a predetermined position on a major surface of the contact glass, as a transport guide member, a third step of executing plasma processing on the major surface of the contact glass after the second step, a fourth step of executing a fluorine coating on the major surface of the contact glass after the third step, a fifth step of sintering the contact glass after the fourth step, and a sixth step of fixing the contact glass to a casing of the image reading apparatus, after the fifth step.

## Description

### [Technical Field]

The present invention relates to a manufacturing method of an image reading apparatus, and more particularly to a manufacturing method of a contact glass for use in a sheet-through image reading apparatus.

### [Background Art]

The sheet-through image reading apparatus is configured to acquire the image representing a source document to be read, by transporting the source document to a major surface of the contact glass, and reading the source document with an image sensor fixed to a surface of the contact glass opposite to the major surface. Each time the document reading is performed, the source document is transported to the major surface of the contact glass, and makes contact with the major surface of the contact glass. Accordingly, the major surface of the contact glass is required to have high endurance against friction with the source document. To improve the endurance against the friction with the source document, normally a liquid-form fluorine coating agent is applied to the major surface of the contact glass, and then the major surface of the contact glass is air-dried, to form a fluorine coating film on the major surface of the contact glass.

### [Citation List]

### [Patent Literature]

[PTL 1] Japanese Unexamined Patent Application Publication No. 2004-75401

### [Summary of Invention]

### [Technical Problem]

In some cases, an additional member is attached to the major surface of the contact glass, by bonding or a similar method. For example, a transport guide member, which serves to guide the source document, being transported toward the major surface of the contact glass, to a reading range of the image sensor, may be bonded to the major surface of the contact glass. However, it is difficult to bond an additional member, such as the transport guide member, to the major surface of the contact glass which is coated with fluorine. Even though the additional member can be once bonded, the additional member is prone to be separated.

A possible solution is covering the region where the additional member is to be bonded with a masking tape, according to a masking technique disclosed in a patent literature (PTL) 1 cited above, and then coating the major surface of the contact glass with fluorine. Such a process allows the major surface of the contact glass to be coated with fluorine except for the region where the additional member is to be bonded, thus to allow the additional member to be bonded to the major surface of the contact glass, after the fluorine coating.

In addition, the major surface of the contact glass may be subjected to a plasma processing before the fluorine coating, or sintered after the fluorine coating, to further improve the endurance of the major surface of the contact glass against the friction with the source document. However, the masking tape covering a part of the contact glass may be deformed or separated, during the plasma processing or sintering. In this case, the fluorine coating is also applied to the masked region, making it difficult to bond an additional member such as the transport guide member to the major surface of the contact glass, after the fluorine coating.

The present invention has been accomplished in view of the foregoing situation, and provides a technique that enables manufacturing of an image reading apparatus, in which the major surface of the contact glass has improved endurance against the friction with the source document, compared with existing image reading apparatuses, and the transport guide member is firmly bonded to the major surface of the contact glass.

### [Solution to Problem]

In an aspect, the present invention provides a manufacturing method of a sheet-through image reading apparatus, configured to transport a source document to be read to a major surface of a contact glass, and read the source document with an image sensor fixed to a surface of the contact glass opposite to the major surface, and including a transport guide member located at a predetermined position outside a reading range of the image sensor on the major surface of the contact glass, to guide the source document to the reading range by contacting the source document at a position upstream of the reading range in a transport direction of the source document, the method including a first step of preparing the contact glass, a second step of bonding, after the first step, a heat-resistant and insulative sheet-shaped material to the predetermined position on the major surface of the contact glass, as the transport guide member, a third step of executing plasma processing on the major surface of the contact glass after the second step, a fourth step of executing a fluorine coating on the major surface of the contact glass after the third step, a fifth step of sintering the contact glass after the fourth step, and a sixth step of fixing the contact glass to a casing of the image reading apparatus, after the fifth step.

### [Advantageous Effects of Invention]

The mentioned arrangement enables manufacturing of the image reading apparatus, in which the major surface of the contact glass has improved endurance against the friction with the source document, compared with existing image reading apparatuses, and the transport guide member is firmly bonded to the major surface of the contact glass.

### [Brief Description of Drawings]

Fig. 1 is a perspective view showing an image forming apparatus including an image reading apparatus to be manufactured through a manufacturing method according to an embodiment of the present invention.
Fig. 2 is a cross-sectional view of the image reading apparatus to be manufactured through the manufacturing method according to the embodiment of the present invention.
Fig. 3 is a perspective view showing the image reading apparatus to be manufactured through the manufacturing method according to the embodiment of the present invention.
Fig. 4 is an enlarged view of a portion around a transport guide member of the image reading apparatus shown in Fig. 2.
Fig. 5 is a view showing equipment for manufacturing a first contact glass of the image reading apparatus.
Fig. 6 is a flowchart showing a manufacturing process of the first contact glass of the image reading apparatus.
Fig. 7A to Fig. 7C are views respectively showing the first contact glass that has undergone a marking process.
Fig. 8A is a flowchart showing a process of fixing the first contact glass and a second contact glass in a casing of a reading unit, and Fig. 8B is a flowchart showing details of a part of the process shown in Fig. 8A.
Fig. 9 is a top view of the casing of the reading unit of the image reading apparatus to be manufactured through the manufacturing method according to the embodiment of the present invention.
Fig. 10 is a table showing experiment results related to the manufacturing method according to the embodiment of the present invention.
Fig. 11 is another table showing experiment results related to the manufacturing method according to the embodiment of the present invention.

### [Description of Embodiments]

Hereafter, a manufacturing method of an image reading apparatus according to an embodiment of the present invention will be described, with reference to the drawings.

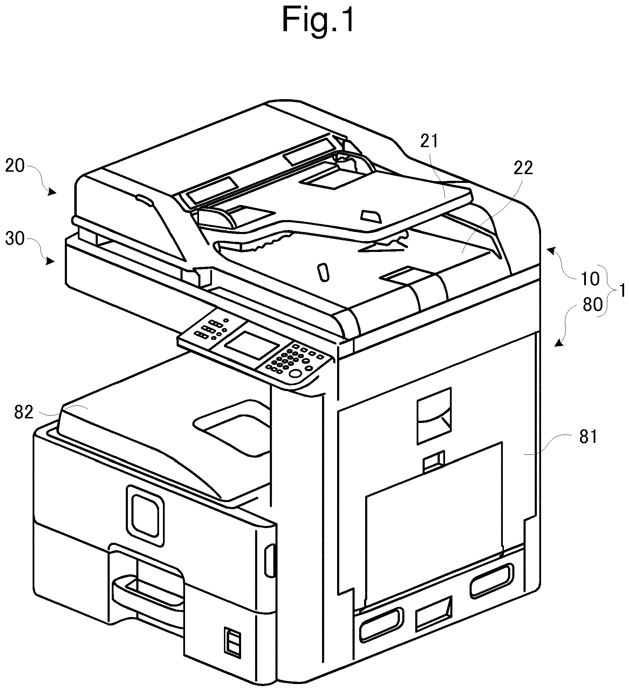

First, the image reading apparatus, to be manufactured through the manufacturing method according to the embodiment of the present invention, will be described. As shown in Fig. 1, the image forming apparatus 1 basically includes a main body 80, and an image reading apparatus 10 located on the upper side of the main body 80.

A casing 81 constituting the outer shell of the main body 80 includes therein an image forming unit (not shown) and related components. The image forming unit forms a toner image of a source document read by the image reading apparatus 10, through a charging, exposing, and developing process, and discharges a recording sheet onto which the toner image has been transferred, to an output tray 82.

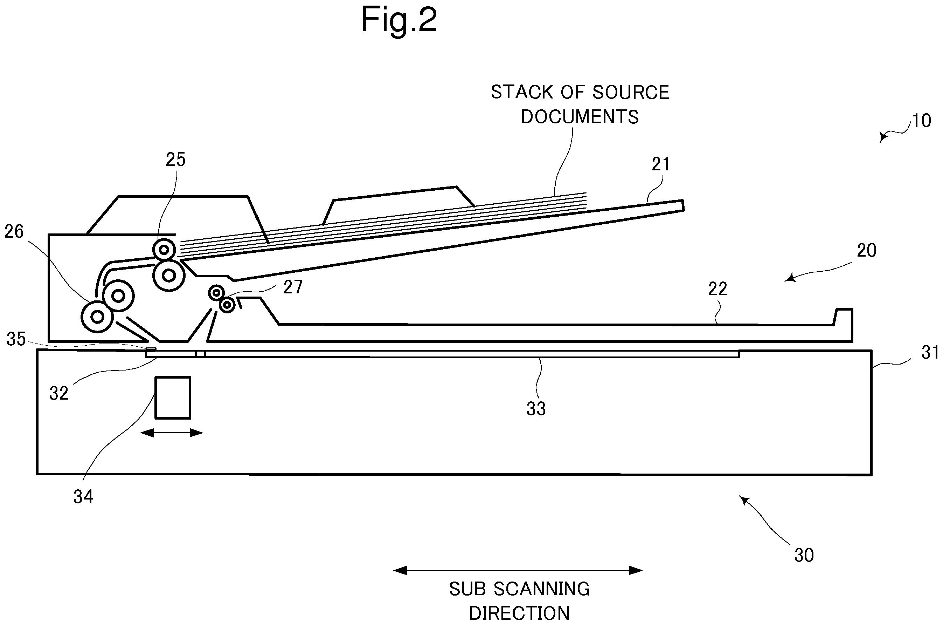

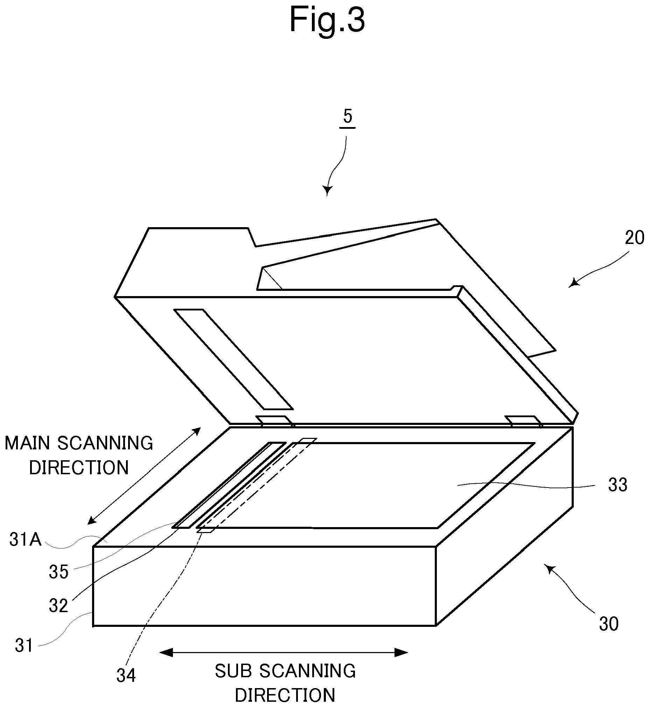

The image reading apparatus 10 includes a reading unit 30, and a document transport unit 20 located on the upper side of the reading unit 30. Fig. 2 is a cross-sectional view showing the image reading apparatus 10, and Fig. 3 is a perspective view showing the image reading apparatus 10. As shown in the cited drawings, the document transport unit 20 of the image reading apparatus 10 includes a document table 21, a document discharge tray 22, a pickup roller 25, a transport roller 26, and a discharge roller 27.

The document transport unit 20 picks up, with the pickup roller 25, the source document one by one from a stack of source documents placed on the document table 21, and transports, with the transport roller 26, the source document that has been picked up, to a major surface (first surface) of a first contact glass 32 to be subsequently described. The source document transported to the first contact glass 32 is read by a scanner 34, which will be subsequently described, at a predetermined document reading position, and then discharged to the document discharge tray 22, by the discharge roller 27.

The reading unit 30 includes a box-shaped casing 31. An upper face 31A of the casing 31 (the face opposing the document transport unit 20 in the closed state thereof) includes an opening, in which a first contact glass 32 and a second contact glass 33 are fitted. The first contact glass 32 constitutes a region for reading a transported document, to which the source document is transported from the document transport unit 20. The second contact glass 33 constitutes a region for reading a fixed document, where a source document is placed. The document transport unit 20 provided on the upper side of the second contact glass 33 is configured to be opened and closed with respect to the major surface of the first contact glass 32 and the second contact glass 33, and serves to fix the source document placed on the second contact glass 33.

A scanner 34, configured to move in a sub scanning direction, is provided on the side of a lower face (second surface) of the first contact glass 32 and the second contact glass 33, opposite to the major surface. The scanner 34 includes a built-in contact image sensor (CIS), extending in a main scanning direction.

To perform the fixed document reading, the scanner 34 reads the source document placed on the second contact glass 33, while reciprocating in the sub scanning direction. In contrast, to perform the transported document reading, the scanner 34 is fixed at a predetermined position (image reading position) on the rear surface of the first contact glass 32, to read the source document transported by the document transport unit 20 toward the major surface of the first contact glass 32. The image data acquired through reading the source document is stored in an image memory or a HDD provided inside the image reading apparatus 10.

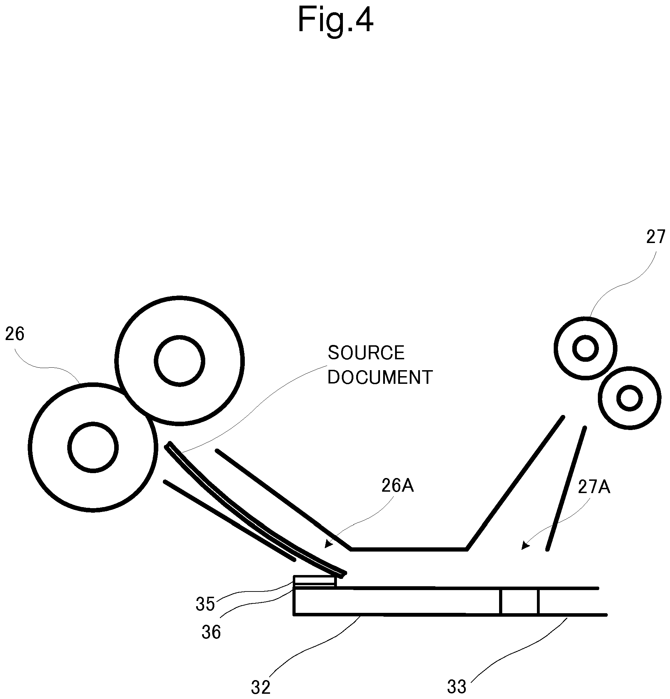

The reading unit 30 also includes a transport guide member 35, provided on the major surface of the first contact glass 32. Fig. 4 is an enlarged view of a portion around the transport guide member 35. As shown in Fig. 2 to Fig. 4, the transport guide member 35 is an elongate sheet extending in the main scanning direction, and bonded to a predetermined position on the major surface of the first contact glass 32, with an adhesive 36. The predetermined position is located close to the position where the scanner 34 is located to read the transported document (image reading position), and outside the reading range of the scanner 34 located at the transported document reading position. A front edge of the transport guide member 35 provided at the predetermined position is located inside the transport route of the source document transported from the transport roller 26. Accordingly, as shown in Fig. 4, the front edge of the transport guide member 35 makes contact with the source document delivered through an opening 26A, at a position upstream of the reading range of the scanner 34, in the transport direction of the source document. The source document delivered through the opening 26A proceeds toward the image reading position on the first contact glass 32, keeping contact with the front edge of the transport guide member 35. When the source document makes contact with the front edge of the transport guide member 35, foreign matters such as dust stuck to the source document is removed by the front edge of the transport guide member 35. Thus, the transport guide member 35 also serves to remove foreign matters stuck to the source document, in addition to guiding the source document toward the image reading position on the first contact glass 32. Further, as shown in Fig. 2 to Fig. 4, the transport guide member 35 is bonded to the predetermined position, which is an end portion of the major surface of the first contact glass 32, on the upstream side in the transport direction of the source document. At such a position, the transport guide member 35 can guide the source document more properly.

Hereunder, a manufacturing method of the image reading apparatus 10 configured as above will be described. Here, the manufacturing method of the parts of the image reading apparatus 10 other than the reading unit 30, for example the document transport unit 20, is similar to a known manufacturing method, and therefore the description will be omitted.

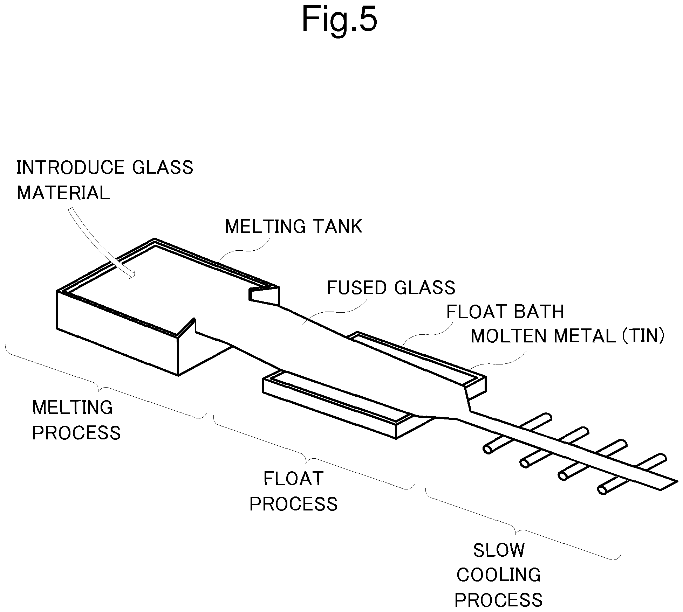

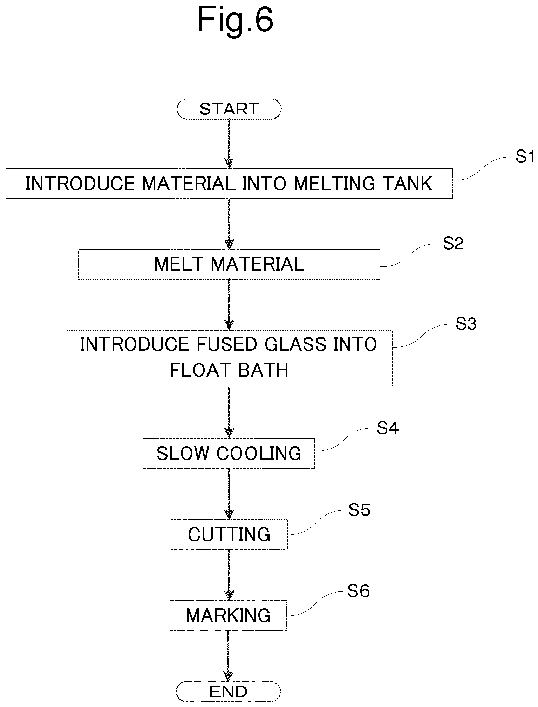

To start with, a manufacturing method of the first contact glass 32 will be described. Fig. 5 is a view showing equipment for manufacturing the first contact glass 32. Fig. 6 is a flowchart showing a manufacturing process of the first contact glass 32.

A glass material, for example silica sand, sodium carbonate, calcium carbonate, or dolomite, is introduced in a melting tank (step S1), and heated to a temperature equal to or higher than 1600 degrees Celsius, to generate fused glass (step S2). Then the fused glass thus generated is introduced in a float bath filled with a molten metal (in this embodiment, tin) (step S3). The fused glass introduced in the float bath floats in a belt-like shape, on the tin filled in the melting tank. Making the fused glass float on the molten tin enables glass having a uniform thickness and a smooth surface to be obtained. Here, the temperature of the fused glass may be lowered to a range between 1100 degrees Celsius and 1300 degrees Celsius, to release air from the fused glass, between the melting process (step S2) and the float process (step S3).

After the float process of step S3, the temperature of the glass is gradually lowered, in a slow cooling line (step S4). Gradually lowering the glass temperature prevents generation of distortion inside the glass.

After the slow cooling process of step S4, the glass is cut in the size of the first contact glass 32 (step S5). After the cutting, a mark for identifying a first surface (tinned surface) of the first contact glass 32 made to contact the molten tin in the float process of step S3, and a second surface (tin-free surface) of the first contact glass 32 opposite to the first surface, and not made to contact the molten tin in the float process, is formed in the first contact glass 32 (step S6).

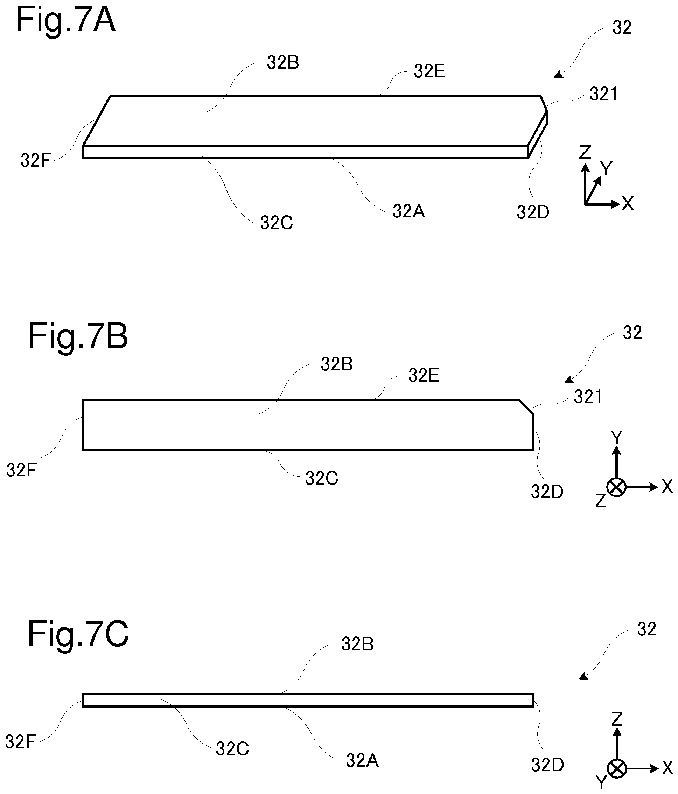

Fig. 7A to Fig. 7C each illustrate the first contact glass 32 that has undergone the process of step S6. In Fig. 7A, a major surface 32B oriented upward in the drawing corresponds to the second surface (tin-free surface) that was not made to contact the tin, and a major surface 32A oriented downward in the drawing corresponds to the first surface (tinned surface) that was in contact with the tin. In this embodiment, a cutaway portion 321, where one of the four corners of the first contact glass 32 is cut away at an angle of 45 degrees, in a view from the side of the first surface (Z-axis direction in the drawing), is formed in the first contact glass 32, as the mentioned mark.

Here, if the major surface 32A and the major surface 32B of the first contact glass 32 were square, the single cutaway portion 321, formed by cutting away one of the four corners of the first contact glass 32, would not serve for distinction between the two major surfaces of the first contact glass 32, namely the tinned surface and the tin-free surface. In this embodiment, however, since the major surface 32A and the major surface 32B of the first contact glass 32 are of an elongate rectangular shape, recording the position where the cutaway portion 321 is formed enables, in a subsequent process, the tinned surface and the tin-free surface to be visually identified, between the two major surfaces of the first contact glass 32. As will be subsequently described in further detail, forming the mentioned mark in the first contact glass 32 allows identification of the major surface that provides better processing results in the subsequent processes, namely a sheet-shaped material bonding process, plasma processing, a fluorine coating process, and a process of fixing the first contact glass 32 to the casing 31 of the reading unit 30, between the two major surfaces of the first contact glass 32, so that the identified major surface can be subjected to the process. Consequently, the endurance of the first contact glass 32 can be improved.

In the case where the second contact glass 33 is manufactured, the marking process of step S6 may be excluded, from the foregoing steps S1 to S6.

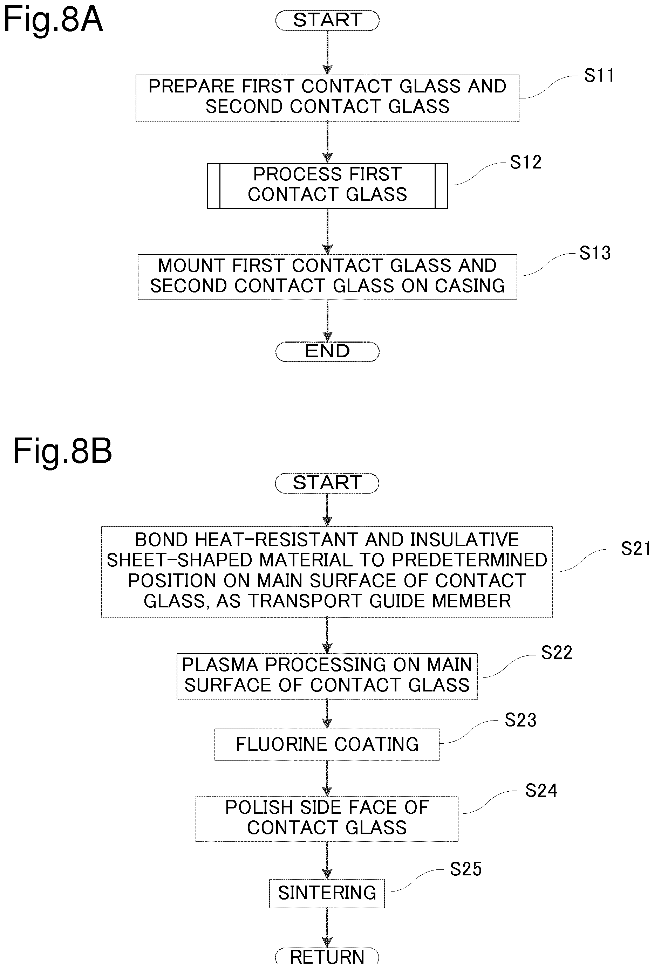

Now, the process of fixing the first contact glass 32 and the second contact glass 33 to the casing 31 of the reading unit 30 will be described. Fig. 8A is a flowchart showing a process of fixing the first contact glass 32 and the second contact glass 33 in the casing 31 of the reading unit 30. Fig. 8B is a flowchart showing details of step S12 shown in Fig. 8A. First, as shown in these drawings, the first contact glass 32 and the second contact glass 33, formed by a known method, are prepared (S11). Then the first contact glass 32 is subjected to the process (step S12), and the first contact glass 32, which has undergone the process, and the second contact glass 33 are mounted in the casing 31 of the reading unit 30 (step S13). Here, although the scanner 34 and other components, and also wirings, have to be mounted inside the casing 31, to complete the manufacturing of the reading unit 30, such process is similar to known techniques, and therefore the description will be omitted.

The details of the process applied to the first contact glass 32 at step S12 will be described hereunder. First, the sheet-shaped material is bonded to a predetermined position on the major surface of the first contact glass 32, as the transport guide member 35 (step S21). At step S21, a heat-resistant and insulative material is employed as the sheet-shaped material. The term "heat-resistant" herein refers to withstanding a heat equal to or higher than 150 degrees Celsius. To attain such resistance, the sheet-shaped material may include, for example, polyvinyl chloride or polyethylene, as the base material.

At step S21, in addition, the major surface to which the sheet-shaped material is to be bonded is the tin-free surface, out of the two major surfaces of the first contact glass 32. At step S21, the tin-free surface is identified out of the two major surfaces of the first contact glass 32, on the basis of the position of the cutaway portion 321 formed at step S6, and the sheet-shaped material is bonded to the tin-free surface thus identified.

It is because, in subsequent steps S22 and S23, the plasma processing and the fluorine coating have to be applied to the tin-free surface, to which the sheet-shaped material is bonded, that the sheet-shaped material is bonded to the tin-free surface, not the tinned surface.

Now, whereas the function of the transport guide member 35 is to guide the source document to the image reading position on the first contact glass 32, and to remove foreign matters stuck to the source document, it suffices that the transport guide member 35 is simply a sheet-shaped material, and it is not necessary to employ the heat-resistant and insulative material as above, to perform the mentioned functions. In this embodiment, however, the heat-resistant and insulative sheet-shaped material is employed as the transport guide member 35, for the following reason.

When an additional member such as the transport guide member 35 is bonded to the first contact glass 32, normally the bonding is performed after the first contact glass 32 is subjected to necessary processes. However, in this embodiment, the first contact glass 32 is subjected to the plasma processing, the fluorine coating, and the sintering to improve the endurance of the first contact glass 32, which makes it difficult to bond the additional member to the first contact glass 32, after the mentioned processings are performed. Therefore, the transport guide member 35 is bonded to the first contact glass 32, before the plasma processing, the fluorine coating, and the sintering are performed, in this embodiment.

However, in the case where the transport guide member 35 is bonded to the first contact glass 32, before the plasma processing, the fluorine coating, and the sintering are performed, the transport guide member 35 is prone to be deformed or separated, during the plasma processing, the fluorine coating, and the sintering.

A possible solution to the above may be covering the region where the transport guide member 35 is to be bonded with a masking tape, before the major surface of the first contact glass 32 is subjected to the plasma processing and the fluorine coating. Such a method allows the major surface of the first contact glass 32 to be subjected to the plasma processing and the fluorine coating, except for the region where the additional member, such as the transport guide member 35, is to be bonded, thus to allow the transport guide member 35 to be bonded to the major surface of the first contact glass 32, after the plasma processing and the fluorine coating. In this case, however, the masking tape may be deformed or separated, during the plasma processing, the fluorine coating, or the sintering. In addition, since the masking process is added, the manufacturing efficiency of the image reading apparatus 10 is lowered.

In contrast, with the manufacturing method according to this embodiment, the heat-resistant and insulative sheet-shaped material is employed as the transport guide member 35, and such sheet-shaped material is bonded to the first contact glass 32 as the transport guide member 35, before the plasma processing and the fluorine coating. Therefore, the image reading apparatus 10, in which the transport guide member 35 is bonded to the major surface of the first contact glass 32, can be manufactured through a fewer number of working processes. In addition, as will be subsequently described in further detail, since the first contact glass 32 is subjected to the plasma processing, the fluorine coating, and the sintering, the first contact glass 32 attains improved endurance against the friction with the source document, compared with the existing image reading apparatuses.

After step S21, the tin-free surface of the first contact glass 32 is subjected to the plasma processing (step S22). To do so, the tin-free surface is identified out of the two major surfaces of the first contact glass 32, according to the position of the cutaway portion 321 formed at step S6. Alternatively, the surface to which the transport guide member 35 has been bonded at step S21 may be identified as the tin-free surface.

Out of the two major surfaces of the first contact glass 32, a thin film of tin is stuck to the tinned surface. Accordingly, distinguishing between the tinned surface and the tin-free surface as above, and applying the plasma processing to the tin-free surface, enhances the surface treatment effect obtained through the plasma processing.

In the plasma processing, the first contact glass 32 is placed inside a chamber, where plasma is generated, and the tin-free surface of the first contact glass 32 is irradiated with the generated plasma. The plasma irradiation provides an energy greater than a binding energy of atoms constituting foreign matters, for example a C-C bond, a C-H bond, and a C-O bond, and therefore the foreign matters stuck to the tin-free surface of the first contact glass 32 are removed. In addition, for example molecules of a hydroxy group ionized because of the plasma irradiation modifies the surface of the first contact glass 32, which leads to improved wettability with water.

Since the transport guide member 35 bonded to the tin-free surface of the first contact glass 32 is formed of the insulative material, the transport guide member 35 is exempted from being burnt, despite being subjected to a voltage of hundreds of volts, during the plasma processing.

After step S22, the tin-free surface of the first contact glass 32 is subjected to the fluorine coating (step S23). More specifically, a liquid-form fluorine coating agent is sprayed onto the tin-free surface of the first contact glass 32, and then the sprayed fluorine coating agent is solidified on the tin-free surface of the first contact glass 32. At this point, a fluorine coating film is formed on the tin-free surface of the first contact glass 32. Since the foreign matters on the tin-free surface of the first contact glass 32 were removed, and the tin-free surface attained improved wettability at step S22, a fine fluorine coating film can be obtained.

Here, normally a liquid-form fluorine coating agent is applied to the major surface of the contact glass, and is then air-dried, to form a fluorine coating film on the major surface of the contact glass. Instead, spraying the liquid-form fluorine coating agent results in formation of a denser fluorine coating film, compared with the process that is normally performed.

At step S23, in addition, the tin-free surface is identified out of the two major surfaces of the first contact glass 32, according to the position of the cutaway portion 321 formed at step S6. Alternatively, the surface to which the transport guide member 35 has been bonded at step S21 may be identified as the tin-free surface. Distinguishing between the tinned surface and the tin-free surface as above, and applying the fluorine coating to the tin-free surface, enhances the surface treatment effect obtained through the fluorine coating.

After step S23, the side faces of the first contact glass 32 (32C, 32D, 32E, and 32F shown in Fig. 7B) are polished (step S24). The fluorine coating on the side faces of the first contact glass 32 is removed by the polishing, because another additional member may be bonded, or an adhesive may be applied to the side faces of the first contact glass 32, in an assembly process of step S26 to be subsequently described. Naturally, it is not necessary to polish all the four side faces of the first contact glass 32, and a side face to which an additional member is not to be bonded does not have to be polished. Further, the polishing of step S24 may be performed after the sintering of step S25.

After step S25, the first contact glass 32 is sintered in a thermostatic chamber. More specifically, the first contact glass 32 is sintered at a temperature of 150 degrees Celsius for 30 minutes (step S25). Since the transport guide member 35 bonded to the tin-free surface of the first contact glass 32 is formed of a heat-resistant material, the transport guide member 35 is kept from being damaged or burnt, during the sintering of step S25.

The details of step S12 applied to the first contact glass 32 are as above. After step S12, the first contact glass 32 and the second contact glass 33 are fitted in the casing 31 of the reading unit 30 (step S13). At this point, the first contact glass 32 is fitted in the casing 31, such that the tin-free surface, identified with the mark formed in the first contact glass 32, is oriented so as to contact the source document transported thereto, and the tinned surface is oriented to the side of the image sensor 34 provided inside the casing 31.

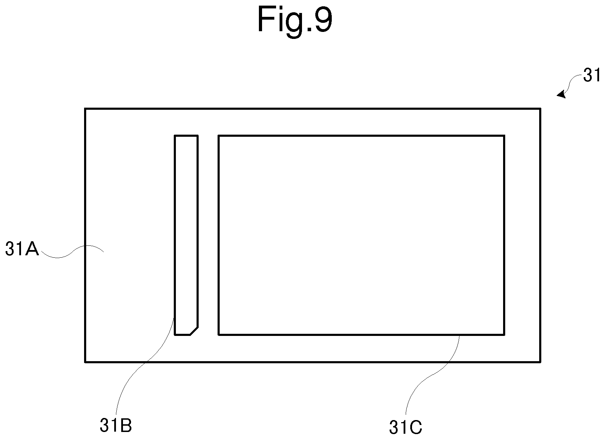

Fig. 9 is a top view of the casing 31 of the reading unit 30. As shown in Fig. 9, the upper face 31A of the casing 31 includes a window 31B in which the first contact glass 32 is fitted, and a window 31C in which the second contact glass 33 is fitted. The window 31B is formed in a shape that corresponds to the cutaway portion 321 of the first contact glass 32, so that upon fitting the first contact glass 32 in the window 31B, the first contact glass 32 is fitted in the casing 31, such that the tin-free surface subjected to the plasma processing and the fluorine coating is oriented so as to contact the source document being transported, and the tinned surface is oriented to the side of the scanner 34 provided inside the casing 31.

### Experiments

The applicant carried out the following experiments based on serious studies, and has reached the foregoing technique, from the experiment results.

### Experiment 1

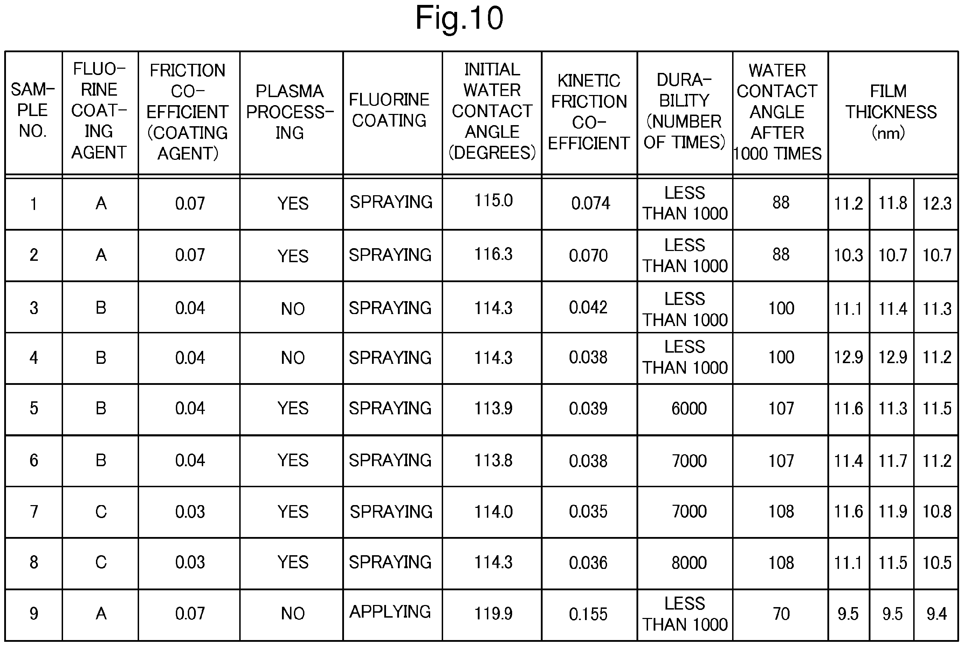

The first contact glass 32 was subjected to surface treatments, under different conditions, in terms of (1) three types of fluorine coating agents A, B, and C, different from each other in friction coefficient, (2) whether the plasma processing was performed, and (3) the method of the fluorine coating (spraying or applying). The results are shown in Fig. 10. In Fig. 10, the "endurance" represents the number of times of polishing performed before the water contact angle became equal to or smaller than 100 degrees, when the first contact glass 32 was polished with steel wool with a load of 1 kg, over a contact area of 1 cm × 1 cm, and at a speed of 60 cycles/min. The "water contact angle after 1000 times" represents the water contact angle measured after 1000 times of polishing with the steel wool. Further, the "kinetic friction coefficient" represents the value measured when the first contact glass 32 was polished with a paraffin paper with a load of 200 gf and at a speed of 200 mm/min.

Through comparison of the results between sample numbers 3, 4 and 5, 6 shown in Fig. 10, it can be understood that the endurance of the first contact glass 32 was significantly improved, by performing the plasma processing before the fluorine coating. Between the sample numbers 1, 2 and 9, the kinetic friction coefficient was significantly lower when the fluorine coating was performed by spraying, than when the fluorine was applied. In addition, when the fluorine coating was performed by spraying, the water contact angle was higher than when the fluorine was applied. Therefore, when the source document is transported to the first contact glass 32, the source document can be free from undue friction from the first contact glass 32. Further, the sample numbers 7 and 8, for which the fluorine coating agent lowest in friction coefficient was used, achieved best results in terms of the endurance, the kinetic friction coefficient, and the water contact angle.

From the above, it can be understood that subjecting the first contact glass 32 to the plasma processing, and then to the fluorine coating by spraying provides the most desirable result.

### Experiment 2

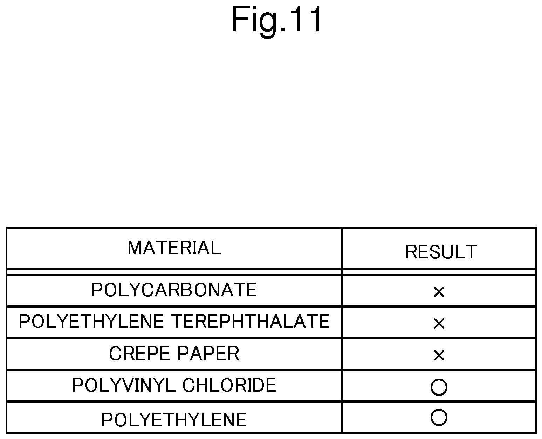

Materials respectively formed of polycarbonate, polyethylene terephthalate, crepe paper, polyvinyl chloride, and polyethylene were bonded to the first contact glass 32, and the first contact glass 32 was subjected to the plasma processing, the fluorine coating, and the sintering. The results are shown in Fig. 11.

The polycarbonate and the polyethylene terephthalate expanded or contracted owing to the heat of the sintering process, and were displaced from the initial position. The crepe paper was burnt or broken, owing to the plasma processing. Presumably, this is because, although the crepe paper is resistant to heat of 160 degrees Celsius, the crepe paper is not insulative. The polyvinyl chloride and the polyethylene were not burnt or broken, despite having undergone the plasma processing, the fluorine coating, and the sintering. It can be construed that this is because the polyvinyl chloride is both resistant to heat of 150 degrees Celsius and insulative, and the polyethylene is both resistant to heat of 200 degrees Celsius and insulative.

From the above, it can be understood that the image reading apparatus 10, in which the transport guide member 35 is bonded to the major surface of the first contact glass 32, can be manufactured through a fewer number of working processes, by employing the heat-resistant and insulative sheet-shaped material, and bonding the sheet-shaped material to the first contact glass 32 as the transport guide member 35, before the plasma processing and the fluorine coating.

### Variations

The present invention may be modified in various manners, without limitation to the configuration according to the foregoing embodiment.

For example, only a predetermined side face (e.g., 32C shown in Fig. 7B) of the first contact glass 32 may be polished at step S24, instead of all the four side faces. Recording the position of the side face of the first contact glass 32 that has been polished, in addition to the position of the cutaway portion 321, more securely enables the tinned surface and the tin-free surface to be visually identified between the two major surfaces of the first contact glass 32, in a subsequent process.

Further, although the cutaway portion 321 is formed as the mark for distinction between the tinned surface and the tin-free surface, in the foregoing embodiment, different marks may be adopted. For example, a notch may be formed in an end portion of the tinned surface.

## Claims

1. A manufacturing method of a sheet-through image reading apparatus, configured to transport a source document to be read to a major surface of a contact glass, and read the source document with an image sensor fixed to a surface of the contact glass opposite to the major surface, and including a transport guide member located at a predetermined position outside a reading range of the image sensor on the major surface of the contact glass, to guide the source document to the reading range by contacting the source document at a position upstream of the reading range in a transport direction of the source document, the method comprising:
a first step of preparing the contact glass;
a second step of bonding, after the first step, a heat-resistant and insulative sheet-shaped material to the predetermined position on the major surface of the contact glass, as the transport guide member;
a third step of executing plasma processing on the major surface of the contact glass after the second step;
a fourth step of executing a fluorine coating on the major surface of the contact glass after the third step;
a fifth step of sintering the contact glass after the fourth step; and
a sixth step of fixing the contact glass to a casing of the image reading apparatus, after the fifth step.

2. The method according to claim 1,
wherein the sheet-shaped material includes polyvinyl chloride or polyethylene, as base material.

3. The method according to claim 1 or 2, further comprising polishing a side face of the contact glass, after the fourth step.

4. The method according to any one of claims 1 to 3,
wherein the fourth step includes forming a fluorine coating film on the major surface of the contact glass, by spraying a liquid-form fluorine coating agent onto the major surface of the contact glass, and solidifying the sprayed fluorine coating agent on the major surface of the contact glass.

5. The method according to any one of claims 1 to 4, further comprising:
a float process including forming, before the first step, the contact glass by causing the fused glass to flow on a molten metal provided in a bath; and
a marking process including forming a mark for identifying a first surface of the contact glass made to contact the molten metal in the float process, and a second surface of the contact glass opposite to the first surface, and not made to contact the molten metal in the float process,
wherein the second step of bonding the sheet-shaped material, the third step of executing the plasma processing, and the fourth step of executing the fluorine coating are performed with respect to the second surface identified as the major surface, according to the mark formed in the contact glass, and
the sixth step includes fixing the contact glass in the casing, such that the second surface indicated by the mark formed in the contact glass is so as to contact the source document being transported, in the casing of the image reading apparatus, and the first surface indicated by the mark is oriented so as to oppose the image sensor provided inside the casing.

6. The method according to claim 5,
wherein the contact glass has a rectangular block shape on which the first surface and the second surface each have an elongate rectangular shape,
the marking process includes forming a cutaway portion in the contact glass as the mark, by cutting away one of four corners of the contact glass in a view from a side of the first surface, and
the second step, the third step, the fourth step, and the sixth step each include identifying the first surface and the second surface of the contact glass, according to a position where the cutaway portion is formed.

7. The method according to claim 6,
wherein the casing includes a window having a shape corresponding to a shape of the contact glass in which the cutaway portion is formed, and
the sixth step includes fixing the contact glass in the casing such that, upon fitting the contact glass in the window, the second surface is oriented so as to contact the source document being transported, in the casing of the image reading apparatus, and the first surface is oriented so as to oppose the image sensor provided inside the casing.

8. The method according to any one of claims 1 to 7,
wherein the second step includes bonding the sheet-shaped material to an end portion of the major surface of the contact glass on an upstream side in the transport direction, as the predetermined position.
